# EUROPÄISCHE PATENTSCHRIFT

(11) **EP 1 006 132 B1**
(45) Veröffentlichungstag und Bekanntmachung des Hinweises auf die Patenterteilung: **01.12.2004**
(21) Anmeldenummer: 99123239.8
(22) Anmeldetag: 26.11.1999
(51) Int. Cl.: C08G 18/28, C08G 18/75, C08G 18/79, C09D 175/04

(54) **Alkoxysilanhaltige Lackzubereitung**
Alkoxysilane containing coating compositions
Compositions de revêtement contenant d'alkoxysilane

(30) Priorität: 04.12.1998 DE 19855999
(43) Veröffentlichungstag der Anmeldung: 07.06.2000
(73) Patentinhaber: Bayer MaterialScience AG, 51368 Leverkusen (DE)
(72) Erfinder: Groth, Stefan, Dr., 51373 Leverkusen (DE); Halpaap, Reinhard, Dr., 51519 Odenthal (DE); Mechtel, Markus, Dr., 50937 Köln (DE); Schmalstieg, Lutz, Dr., 50676 Köln (DE); Yeske, Philip E., Dr., 51061 Köln (DE)

(56) Entgegenhaltungen:
- EP-A- 0 498 442
- US-A- 4 625 012
- US-A- 4 640 868

## Beschreibung

Die Erfindung betrifft alkoxysilanhaltige Lackzubereitungen auf Basis von 4,4'-Diisocyantodicyclohexylmethan-Polyisocyanaten und dessen Verwendung als Schutzlack. Die Lackzubereitungen trocknen vorzugsweise schon bei Raumtemperatur.

Lackschädigungen durch Einpenetrieren von Farbstoffen, wie sie beispielsweise durch Graffiti hervorgerufen werden, stellen ein zunehmendes Problem dar. Herkömmliche organische Lacke werden von den in den Lacksprays enthaltenen Lösungsmitteln angequollen und können somit von den Farbstoffen leicht durchdrungen werden. Eine Reinigung ist dann ohne Zerstörung der Lackschicht nicht mehr möglich.

Es besteht daher ein Bedarf an Überzügen, die eine wirksame Barriere für Lösungsmittel und Farbstoffe bilden und somit das darunterliegende Substrat vor Verunreinigung schützen.

Überzüge, die mit dem Farbstoff oder der Verunreinigung entfernt werden können (z.B. FR-A 2 747 325, WO 97/24407), bieten zwar einen ausreichenden Schutz, erfordern aber, da sie immer wieder neu aufgebracht werden müssen einen erheblichen Aufwand.

Dauerhafte Lacke können mit Silikonen- oder Fluorpolymeren zur Herabsetzung der Oberflächenenergie ausgerüstetet werden (z.B. EP-A 695 772, FR-A 2 681 072), so daß eine Benetzung der Oberfläche erschwert wird. Nachteilig ist aber, daß nicht chemisch angebundene Fluor- oder Silikonpolymere mit der Zeit unter Witterungseinfluß herausgewaschen werden und die Wirkung somit mit der Zeit verloren geht. Chemisch angebundene Polymere dagegen führen zu Unverträglichkeiten, Trübungen und schlechter Substrathaftung, so daß dekorative Klarlacke, die eine hohe Transparenz aufweisen, nicht damit ausgerüstet werden können.

Ultraharte Sol-Gel-Lacke (z. B. EP-A 576 166) hingegen bieten einen guten Schutz z.B. vor Graffiti. Allerdings müssen diese Systeme bei höherer Temperatur eingebrannt werden, so daß eine Anwendung beispielweise bei der Großfahrzeuglackierung nicht in Frage kommt. Zudem haben diese Lacksysteme insbesondere auf anderen Lacken eine schlechte Haftung und weisen oft eine unzureichende Steinschlagbeständigkeit auf.

Umsetzungsprodukte von Aminosilanen mit Polyisocyanaten (silanfunktionelle Harnstoffe) sind seit längerem bekannt und können beispielsweise zur Herstellung von elastischen Beschichtungen eingesetzt werden (US-A 5700868, US-A 4 625 012, US-A 4 474 933, US-A 3 979 344, DE-A 4 234 325, DE-A 2 155 259). Da diese Produkte zum größten Teil auf höhermolekularen Polyolen basieren und die Vernetzungsdichte niedrig ist, sind diese Beschichtungen als Schutzlacke gegen färbende Flüssigkeiten weniger geeignet. Silanfunktionelle Harnstoffe können aber prinzipiell für die Herstellung von Sol-Gel-Lacken mit hoher Vernetzungsdichte verwendet werden. Nachteilig ist allerdings deren oft starke Kristallisationsneigung und/oder deren zu geringe Härtungsgeschwindigkeit bei Raumtemperatur, so daß auch mehrere Tage nach der Applikation noch keine effiziente Schutzschicht gebildet worden ist.

Aufgabe der Erfindung war es also, einen Schutzüberzug zur Verfügung zu stellen, der vorzugsweise nicht eingebrannt werden muß und der nach der Applikation innerhalb von 24 h bei Raumtemperatur soweit gehärtet ist, daß z.B. ein Einpenetrieren von Farbstoffen (z.B. Graffiti) wirkungsvoll verhindert wird. Zudem zeigt der Lack eine hohe optische Güte und eine gute Verkratzungsbeständigkeit, so daß beispielsweise ein Einsatz bei der Fahrzeuglackierung möglich ist.

Es wurde nun überraschend gefunden, daß Siloxan-härtende Lacke auf Basis von hochfunktionellen 4,4'-Diisocyanatodicyclohexylmethan-Polyisocyanaten innerhalb von 24 Stunden nach der Applikation eine effiziente Sperrschicht gegen Farbstoffe aus Graffiti bilden. Zudem sind diese Lacke auf beliebigen Substraten applizierbar, weisen eine gute Kratzbeständigkeit auf und bieten einen wirkungsvollen Schutz gegen Verunreinigungen jeglicher Art.

Gegenstand der Erfindung sind Lack-Zubereitungen dadurch gekennzeichnet, daß sie im Lackfestkörper 40 bis 100 Gew.-% eines Alkoxysilyl-funktionellen Polyisocyanat-Polyhamstoffs enthalten, der hergestellt wird aus
A) einem Polyisocyanat(-gemisch), das zu mindestens 50 Gew.-% aus einem 4,4'-Diisocyanatodicyclohexylmethan-Polyisocyanat besteht und eine mittlere NCO-Funktionalität von 2,5 bis 5,5, einen Gehalt an Isocyanatgruppen-Gruppen von 11,0 bis 20,0 Gew.-% und einen Gehalt an monomerem Diisocyanat von kleiner 10 Gew.-% aufweist
   und
B) mindestens 0,7 Äquivalenten (bez. auf Isocyanatgruppen) Aminosilan der Formel (I)

   (RO)ₙY₍₃₋ₙ₎Si-CH₂CH₂CH₂-NHZ (I),

   in welcher
   R für Methyl, Ethyl,
   Y für Methyl,
   Z für H, C₁-C₁₂-Alkyl, CH₂CH₂CH₂-Si(RO)ₙY₃₋ₙ und
   n für die Zahl 1, 2 oder 3
   stehen
   und
C) gegebenenfalls weiteren gegenüber Isocyanaten reaktiven Verbindungen.

Die bei der erfindungsgemäßen Lackzubereitung einzusetzende Komponente A) weist eine mittlere NCO-Funktionalität von 2,5 bis 5,5, vorzugsweise 2,8 bis 5,0, besonders bevorzugt 3,0 bis 4,5, einen Gehalt an Isocyanatgruppen-Gruppen bezogen auf den Festkörper von 11,0 bis 20,0 Gew.-%, vorzugsweise 11,5 bis 17,0 Gew.-%, besonders bevorzugt 12,0 bis 16,0 Gew.-%, und einen Gehalt an monomerem Diisocyanat von weniger als 10 Gew.-% vorzugweise weniger als 2,0 Gew.-%, besonders bevorzugt weniger als 0,5 Gew.-% auf. Sie basiert auf mehr als 50 Gew.-%, bevorzugt mehr als 70 Gew.-%, besonders bevorzugt mehr als 80 Gew.-% 4,4'-Diisocyanatodicyclohexylmethan.

Zur Herstellung der erfindungsgemäßen Lackzubereitung können beliebige Polyisocyanat(gemische)e A) auf Basis von 4,4'-Diisocyanatodicyclohexylmethan verwendet werden wie beispielsweise Biurete, Isocyanurate (Trimerisate), Iminooxadiazindione, Uretdione, Allophanate oder Adukte mit niedermolekularen mehrfunktionellen Alkoholen wie Trimethylolpropan, 1,6-Hexandiol, 1,5-Pentandiol, Diethylenglykol, Triethylenglykol, 2,2,4-Trimethyl-1,3-propandiol, Neopentylglykol bzw. deren Gemische.

Bevorzugt sind Isocyanurate (Trimerisate) auf Basis von 4,4'-Diisocyanatodicyclohexylmethan, die einen NCO-Gehalt von 12 bis 16 Gew.-%, eine NCO-Funktionalität von 3,0 bis 4,5 und einen Monomerengehalt von < 2 Gew.-% aufweisen und die beispielsweise nach einem Trimerisierungsverfahren analog z.B. der EP-A 330 996 hergestellt werden können.

Daneben kann die Komponente A) beliebige weitere Di- oder Polyisocyanate enthalten, beispielweise monomere Diisocyanate wie 1,4-Butandiisocyanat, 1,6-Hexandiisocyanat (HDI), 3-Isocyanatomethyl-3,3,5-trimethylcyclohexylisocyanat (Isophorondiisocyanat = IPDI), 2-Methyl-1,5-pentandiisocyanat, 2,2,4-Trimethylhexamethylendiisocyanat (TMDI), 1,12-Dodecandiisocyanat, Bis(isocyanatomethyl) norboman, Triisocyanate wie z. B: 4-Isocyanatomethyl-1,8-octandiisocyanat oder beliebige aus diesen Ausgangsisocyanaten herstellbare Polyisocyanate wie sie beispielweise in J. prakt. Chem. 1994, 336, 185-200 und Lackharze, Chemie, Eigenschaften und Anwendungen, Hrsg. D. Stoye, W. Freitag, Hanser Verlag, München, Wien 1996 beschrieben sind. Die Mischungen sollen den oben erwähnten Kenndaten bzgl. NCO-Gehalt, NCO-Funktionalität und Monomerengehalt genügen.

Zur besseren Handhabbarkeit können die Polyisocyanatgemische A) mit bis zu 50 Gew.-% üblicher Lacklösemittel verdünnt werden. Als Lacklösemittel geeignet sind Lösungsmittel, die gegenüber NCO-Gruppen nicht reaktiv sind, wie beispielsweise Butylacetat, Ethylacetat, 1-Methoxy-2-propylacetat, Toluol, 2-Butanon, Xylol, 1,4-Dioxan N-Methylpyrrolidon, Dimethylacetamid, Dimethylformamid, Dimethylsulfoxid.

Die Polyisocyanate A) werden mit mindestens 0,7 Äquivalenten, bevorzugt mindestens 0,8 Äquivalenten, besonders bevorzugt mindestens 0,9 Äquivalenten (bez. auf Isocyanat) eines Aminosilans B) der Formel (I)

(RO)ₙY₍₃₋ₙ₎Si-CH₂CH₂CH₂-NHZ (I),

in welcher
R für Methyl, Ethyl,
Y für Methyl,
Z für H, C₁-C₁₂-Alkyl, CH₂CH₂CH₂-Si(RO)ₙY₃₋ₙ und
n für die Zahl 1, 2 oder 3
stehen umgesetzt.

Beipiele für verwendbare Aminosilane sind 3-Aminopropyltrimethoxysilan, 3-Aminopropyltriethoxysilan, 1-Amino-2,2-dimethyl-4-methyldimethoxysilan, Bis(3-trimethoxysilylpropyl)amin, 3-Aminopropyl-methyldiethoxysilan, 3-(N-Methylamino)-propyl-trimethoxysilan. Bevorzugt einzusetzende Aminosilane sind 3-Aminopropyltrimethoxysilan und 3-Aminopropyltriethoxysilan. Selbstverständlich können auch Gemische verschiedener Aminosilane eingesetzt werden.

Die verbleibenden NCO-Äquivalente können gegebenfalls mit beliebigen gegenüber Isocyanat reaktiven Verbindungen C) wie zum Beispiel niedermolekularen Alkoholen wie aliphatischen C₁- bis C₈- und C₅- bis C₆-cycloaliphatischen Alkoholen und/oder aliphatischen C₁- bis C₈- oder C₅- bis C₆-cycloaliphatischen Aminen umgesetzt werden. Daneben können auch Blockierungsmittel wie Butanonoxim, 3,5-Dimethylpyrazol, Malonsäurediethylester, ε-Caprolactam eingesetzt werden. Ebenso ist es möglich die verbleibenden NCO-Äqualente mit nieder- und höhermolekularen Polyhydroxylverbindungen wie Polyethern, Polyestern oder Polycarbonaten umzusetzen. Falls diese Polyole mitverwendet werden, wird die Umsetzung mit diesen Verbindungen bevorzugt vor der Reaktion mit dem Aminosilan durchgeführt. Ganz besonders bevorzugt ist eine Ausführungsform, bei der keine Polyole mitverwendet werden, sondern 0 bis 5 Äquivalent-Prozente aller ursprünglichen NCO-Gruppen mit den als Lösungsmittel verwendeten niedermolekularen Monoalkoholen umgesetzt werden.

Höhermolekulare Hydroxylverbindungen umfassen die in der Polyurethan-Chemie üblichen Hydroxypolyester, Hydroxypolyether, Hydroxypolythioether, Hydroxypolyacetale, Hydroxypolycarbonate, Dimerfettalkohole und/oder Esteramide, jeweils mit mittleren Molekulargewichten Mn von 400 bis 8 000, bevorzugt solche mit mittleren Molekulargewichten von 500 bis 6 500.

Als niedermolekulare Polyhydroxylverbindungen können in der Polyurethan-Chemie übliche Polyole, mit Molekulargewichten von 62 bis 399, wie Ethylenglykol, Triethylenglykol, Tetraethylenglykol, Propandiol-1,2 und -1,3, Butandiol-1,4- und -1,3, Hexandiol-1,6, Octandiol-1,8, Neopentylglykol, 1,4-Bis(hydroxymethyl)cyclohexan, Bis(hydroxymethyl)tricyclo[5.2.1.02.6]decan oder 1,4-Bis(2-hydroxyethoxy)benzol, 2-Methyl-1,3-propandiol, 2,2,4-Trimethylpentandiol, 2-Ethyl-1,3-hexandiol, Dipropylenglykol, Polypropylenglykole, Dibutylenglykol, Polybutylenglykole, Bisphenol A, Tetrabrombisphenol A, Glycerin, Trimethylolpropan, Hexantriol-1,2,6-Butantriol-1,2,4, Pentaerythrit, Chinit, Mannit, Sorbit, Methylglykosid und 4,3,6-Dianhydrohexite verwendet werden.

Als Polyetherpolyole geeignet sind die in derPolyurethan-Chemie üblichen Polyether, wie z.B. die unter Verwendung von zwei- bis sechswertigen Startermolekülen wie Wasser oder den oben genannten Polyolen oder 1- bis 4-NH-Bindungen aufweisenden Aminen hergestellten Additions- bzw. Mischadditionsverbindungen des Tetrahydrofurans, Styroloxids, Ethylenoxids, Propylenoxids, der Butylenoxide oder des Epichlorhydrins, insbesondere des Ethylenoxids und/oder des Propylenoxids.

Als Polyesterpolyole geeignet sind z.B. Umsetzungsprodukte von mehrwertigen, vorzugsweise zweiwertigen und gegebenenfalls zusätzlich dreiwertigen Alkoholen mit mehrbasischen, vorzugsweise zweibasischen Carbonsäuren. Anstelle der freien Polycarbonsäuren können auch die entsprechenden Polycarbonsäureanhydride oder entsprechenden Polycarbonsäureester von niedrigen Alkoholen oder deren Gemische zur Herstellung der Polyester verwendet werden. Die Polycarbonsäuren können aliphatischer, cycloaliphatischer aromatischer und/oder heterocyclischer Natur sein und gegebenenfalls z.B. durch Halogenatome substituiert und/oder ungesättigt sein. Beispiele hierfür sind:

Adipinsäure, Phthalsäure, Isophthalsäure, Bernsteinsäruure, Korksäure, Azelainsäure, Sebacinsäure, Trimellitsäure, Phthalsäureanhydrid, Tetrahydrophthalsäureanhydrid, Glutarsäureanhydrid, Tetrachlorphthalsäureanhydrid, Endomethylentetrahydrophthalsäureanhydrid, Maleinsäureanhydrid, Maleinsäure, Fumarsäure, dimere und trimere Fettsäuren wie Ölsäure, gegebenenfalls in Mischung mit monomeren Fettsäuren, Terephthalsäuredimethylester, Terephthalsäure-bis-glykolester.

Als mehrwertige Alkohole kommen die oben genannten Polyole in Frage.

Die in Frage kommenden Polycarbonatpolyole sind durch Reaktion von Kohlensäurederivaten, z.B. Diphenylcarbonat oder Phosgen, mit Diolen erhältlich. Als derartige Diole kommen z.B. Ethylenglykol, Triethylenglykol, Tetraethylenglykol, Propandiol-1,2 und -1,3,-Butandiol-1,4- und -1,3, Pentandiol-1,5, Hexandiol-1,6, Octandiol-1,8, Neopentylgkylol, 1,4-Bis(hydroxymethyl)cyclohexan, Bis(hydroxymethyl)tricyclo[5.2.1.02.6]decan oder 1,4-Bis(2-hydroxyethoxy)benzol, 2-Methyl-1,3-propandiol, 2,2,4-Trimethylpentandiol, Dipropylenglykol, Polypropylenglykole, Dibutylenglykol, Polybutylenglykole, Bisphenol A und Tetrabrombisphenol A oder Mischungen der genannten Diole in Frage. Vorzugweise erhält die Diolkomponente 40 bis 100 Gew.-% Hexandiol, vorzugsweise Hexandiol-1,6, und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton gemäß DE-A 1 770 245, oder durch Veretherung von Hexandiol mit sich selbst zum di- oder Trihexylenglykol erhalten wurden. Die Herstellung solcher Derivate ist z.B. aus der DE-A 1 570 540 bekannt. Auch die in der DE-A 3 717 060 beschriebenen Polyether-Polycarbonatdiole können eingesetzt werden.

Die Hydroxypolycarbonate sollen im wesentlichen linear sein. Sie können aber auch gegebenenfalls durch den Einbau polyfunktioneller Komponenten, insbesondere niedermolekularer Polyole, leicht verzweigt werden. Hierzu eignen sich beispielsweise Trimethylolpropan, Hexantriol-1,2,6, Glycerin, Butantriol-1,2,4, Pentaerythrit, Chinit, Mannit, Sorbit, Methylglykosid und 4,3,6-Dianhydrohexite.

Einsetzbare Polyether sind im Durchschnitt 2 bis 3 Hydroxylgruppen aufweisende Propylenoxidpolyether, die bis zu maximal 50 Gew.-% eingebaute Polyethylenoxid-Einheiten enthalten mit mittleren Molekulargewichten zwischen 200 und 9000, und/oder difunktionelle Tetrahydrofuran-Polyether mit mittleren Molekulargewichten zwischen 200 und 4000 und/oder Polypropylenoxydpolyether mit einen Gesamt-Unsättigungsgrad von maximal 0,04 mÄq/g und einem mittleren, aus OH-Gehalt und Funktionalität berechneten Molekulargewicht von 2000 bis 12000 eingesetzt.

Einsetzbare Polyetherpolyole mit niedrigem Unsättigungsgrad sind prinzipiell bekannt und werden beispielhaft beschrieben in den EP-A 283 148, US-A 3 278 457, US-A 3 427 256, US-A 3 829 505, US-A 4 472 560, US-A 3 278 458, US-A 3 427 334, US-A 3 941 849, US-A 4 721 818, US-A 3 278 459, US-A 3 427 335, US-A 4 355 188. Schlüssel zur Herstellung derartiger Polyetherpolyole mit niedrigem Unsättigungsgrad ist die Katalyse mit Metallcyaniden.

Die erfindungsgemäße Lackzubereitung enthält im Lackfestkörper 40-90 Gew.-%, bevorzugt 50-80 Gew.-% des oben beschriebene Silan-funktionelle Harnstoffs.

Gegebenfalls können bis zu 60 Gew.-%, bevorzugt 20-50 Gew.-%, bezogen auf den Lackfestkörper eines Silans der Formel (II)

QSi(OX)₃ (II),

in welcher
- X: für Me, Et, iPr, Bu und
- Q: für H, C₁- bis C₈-Alkyl, Phenyl, Methoxy, Ethoxy, 3-Glycidyloxy-propyl, 3-Aminopropyl, 3-Methacroyloxy-propyl
steht
oder daraus erhältliche Hydrolysate/Kondensate mitverwendet werden. Bevorzugt wird Tetraethoxysilan oder daraus erhältliche Kondensate eingesetzt.

Die Lackzubereitung enthält 40 bis 95 %, bevorzugt 60 bis 90 % an beliebigen Lösungsmitteln, der aus der Lackchemie an sich bekannten Art. Bevorzugte Lösungsmittel sind aliphatische Alkohole wie beispielsweise Ethanol, i-Propanol, n-Propanol, n-Butanol, i-Butanol, sek-Butanol, tert-Butanol, Etheralkohole wie beispielsweise 1-Methoxy-2-propanol oder C1 bis C4-Glykolmonoalkylether. Es kann von Vorteil sein, dipolare Lösungsmittel wie N-Methylpyrrolidon, Dimethylacetamid, Dimethylformamid, Dimethylsulfoxid, Dioxan mitzuverwenden. Auch aromatische Lösungsmittel wie Toluol, Xylol können beispielsweise in Mischung mit Alkoholen verwendet werden. Weiterhin sind Ester und Etherester wie Ethylacetat, Butylacetat, Methoxypropylacetat geeignet. Wasser kann ebenfalls mitverwendet werden, allerdings ist der Zusatz in den meisten Fällen erst kurz vor der Verarbeitung sinnvoll, wenn die Hydrolyse zum beschichtungsfertigen Sol eintreten soll.

Für die Herstellung der erfindungsgemäßen Lackzubereitungen sind verschiedene Verfahrenweisen möglich. Die Polyisocyanatmischung A) wird mit einem Lösungsmittel verdünnt und bei Temperaturen zwischen 25 bis 30°C unter Kühlung zu dem in einem Lösungsmittel verdünnten Aminosilan B) getropft. Es hat sich hierbei gezeigt, daß die Mitverwendung von Alkoholen und/oder stark polaren Lösungsmitteln zur Verhinderung von Ausfällungen und Kristallisation beiträgt. Werden Alkohole mitverwendet, werden sie bevorzugt zusammen mit der Aminkomponente eingebracht. Um einen evtl. störenden Aminüberschuß zu vermeiden, kann es von Vorteil sein, die Aminkomponente unterstöchiometrisch einzusetzen. Nach der Reaktion wird die Komponente B) zugegeben und gegebenfalls der Katalysator hinzugefügt.

Gegenstand der Erfindung ist auch das letztlich zur Beschichtung einsetzbare Hydrolysat/Kondensat, das aus der obengenannten Lackzubereitung durch Zugabe von Wasser oder einer wäßrigen Lösung eines Katalysators hergestellt wird.

Die erfindungsgemäßen Lackzubereitungen können vorzugsweise als Sol-Gel-Lacksystem eingesetzt werden. Diese Lacksysteme sind im erfindungsgemäßen Sinne Alkoxysilylgruppen enthaltende Zubereitungen, in denen vor der Applikation ein Teil der Alkoxysilylgruppen mit Wasser hydrolysiert worden ist. Diese hydrolysierten Gruppen können teilweise kondensieren (Siloxanbindung).
(Siehe Sol-Gel Science: The physics and chemistry of Sol-Gel Processing. Academic Press New York 1990.)

Zur Herstellung der Sol-Gel-Lacksysteme wird den erfindungsgemäßen Lackzubereitungen 0,5 bis 25 Gew.-%, bevorzugt 2 bis 20 Gew.-% (bez. auf Gesamtmischung) Wasser gegebenenfalls zusammen mit einem Hydrolysekatalysator zugesetzt. Geeignete Hydrolysekatalysatoren sind beispielsweise in W. Noll, Chemie und Technologie der Silikone, VCH-Verlag 1968, beschrieben. Beispiele sind Säuren wie Salzsäure, Schwefelsäure, p-Toluolsulfonsäure, Trifluoressigsäure, Essigsäure, und Ameisensäure. Es können bis zu 2 %, bevorzugt bis zu 0,5 % (bez. auf den Lackfestkörper) Säure verwendet werden.

Nach der Zugabe des wäßrigen Katalysators läßt man die Mischung ca. 1 Stunde bei Raumtemperatur reagieren. Danach kann das üblicherweise 10 bis 40 %ige Sol nach den üblichen Methoden wie Spritzen, Fluten, Rakeln oder Tauchen appliziert werden. Für spezielle Anwendungen kann eventuell auch der Einsatz eines Primers sinnvoll sein.

Die Topfzeit der beschichtungsfertigen Mischung beträgt, je nach Art und Menge des Katalysators und der eingesetzten Polyisocyanatmischung 2 bis 24 Stunden.

Die in der Regel 2 bis 20 µm starken Beschichtungen erreichen in der Regel bereits nach 24 h bei Raumtemperatur einen ausreichenden Härtungsgrad, so daß sie die Penetration von Farbstoffen aus Graffiti-Simulantien wie blauem Permanent-Marker und sogar 1 %iger ethanolischer Fuchsinlösung wirkungsvoll verhindert werden kann. Für spezielle Anwendungen, beispielweise im Automobilbereich, kann aber auch eine Härtung bei erhöhter Temperatur erfolgen.

Die erfindungsgemäßen Lacke können auch in üblicher Weise ohne Zusatz von Wasser als lufttrocknende Lacksysteme appliziert werden.

Es können beliebige Substrate wie Kunststoffe (z.B. Polycarbonat, Polyamid, Polyester, ABS, Polystyrol, PPO-Polyamidblends, PPS), Lacke (bereits lackierte Oberflächen), Marmor, Granit, Metalle, Holz, Leder und Textilien mit der erfindungsgemäßen Beschichtung versiegelt werden.

### Beispiele

Die nachfolgenden %-Angaben beziehen sich auf das Gewicht.

Bei den Beständigkeitsprüfungen gegen Aceton und Ethanol wurde der Film nach einer 5 minütigen Einwirkdauer nach folgenden Kriterien beurteilt:
- 0: unverändert
- 1: Spur verändert
- 2: gering verändert
- 3: moderat verändert
- 4: stark verändert
- 5: Film zerstört

Zur Simulation einer Graffitiverunreinigung wurde eine 1 %ige ethanolische Fuchsinlösung und ein blauer Permanent-Marker (Edding® 850) verwendet. Nach einer Einwirkzeit von 15 Minuten wurden die Farben mit Isopropanol entfernt.

Die Beurteilung der Beständigkeiten wurde anschließend nach folgenden Kriterien vorgenommen:
- 0: keine Spuren
- 1: leichter Farbschatten
- 2: leichter Fleck
- 3: deutlicher Fleck ohne Oberflächenschädigung
- 4: deutlicher Fleck mit erkennbarem Rand
- 5: Film nach Abwischen zerstört

### Beispiel 1

2620 g 4,4'-Diisocyanatodicyclohexylmethan werden bei 60°C mit 6 g einer 10 %igen Katalysatorlösung von Trimethyl-benzylammoniumhydroxid, gelöst in 2-Ethylhexanol : Methanol = 5 :1, bei einer Temperatur von 60 - 75°C bis zu einem NCO-Gehalt von 26,8 % trimerisiert. Zur Beendigung der Trimerisierungsreaktion werden 0,5 g Bis(2-ethylhexyl)phosphat zugegeben. Nun wird die klare Rohlösung mit 130 g eines Isocyanuratpolyisocyanats auf Basis von Diisocyanatohexan (HDI), das nach Beispiel 12 der EP-A 330 966 erhalten wurde, versetzt und bei 200°C/0,15 mbar durch Dünnschichtdestillation monomeres 4,4'-Diisocyanatodicyclohexylmethan abgetrennt. Man erhält ein helles, leicht gelbliches Festharz mit einem NCO-Gehalt von 15,1 %, einem Schmelzpunkt von ca. 100°C, einem Gehalt an monomerem Diisocyanat von <0,2 % und einer aus dem NCO-Gehalt berechneten durchschnittlichen NCO-Funktionalität von 3,5. Das Festharz wir anschließend 70 %ig in Butylacetat gelöst.

### Beispiel 2

21,7 g (0,098 mol) 3-Aminopropyltrimethoxysilan werden mit 252 g Ethanol verdünnt. 39,2 g (0,1 val) 70 %iges Trimerisat aus Beipiel 1 werden mit 15,7 g N-Methylpyrrolidon versetzt und bei 25-30°C unter Kühlung zu der Aminlösung getropft. Schließlich läßt man die Lösung bei Raumtemperatur stehen, bis die NCO-Bande im IR-Spektrum verschwunden ist. Danach werden 20,7 g Tetraethoxysilan zugefügt. Man erhält eine lagerstabile Lösung mit einem Festkörpergehalt von 20 %.

Um das beschichtungsfertige Sol zu erhalten, werden zu 100 g der obigen Lösung 14 g 0,0067 n Salzsäure zugegeben und 1 Stunde stehen gelassen. Anschließend wird das Sol mit einem 30 µm Rakel auf eine Glasplatte aufgetragen und 24 Stunden bei Raumtemperatur aushärten lassen.

### Beispiel 3

21.7 g (0,098 mol) 3-Aminopropyltrimethoxysilan werden mit 107 g Ethanol verdünnt. 39,2 g (0,1 val) 70 %iges Trimerisat aus Beipiel 1 werden mit 15,7 g N-Methylpyrrolidon versetzt und bei 25-30°C unter Kühlung zu der Aminlösung getropft. Schließlich läßt man die Lösung bei Raumtemperatur stehen, bis die NCO-Bande im IR-Spektrum verschwunden ist. Danach werden 20,7 g Tetraethoxysilan zugefügt. Man erhält eine lagerstabile Lösung mit einem Festkörpergehalt von 34 %.

Die Applikation erfolgt analog Beispiel 2

Die Eigenschaften der Produkte aus Beispiel 2 und 3 sind in der untenstehenden Tabelle zusammengefaßt.

**Tabelle 1**

| **Beispiel** | **2** | **3** |
|---|---|---|
| Festkörpergehalt | 17,5 % | 29,8 % |
| Filmoptik | klar | geringeTrübung |

| 24 h | | |
|---|---|---|
| Aceton | 0 | 0 |
| Ethanol | 0 | 0 |
| Fuchsinlösung | 0 | 1 |
| Edding® 850 | 0 | 0 |

| 48 h | | |
|---|---|---|
| Aceton | 0 | 0 |
| Ethanol | 0 | 0 |
| Fuchsinlösung | 0 | 0 |
| Edding® 850 | 0 | 0 |

### Beispiele 4 bis 8

Die Beipiele 4 bis 6 sind erfindungsgemäß, Beispiel 7 und 8 stellen nicht erfindungsgemäße Vergleichsbeispiele dar. Die Komponenten werden in der angegebenen Reihenfolge zusammengegeben und nach Zugabe der Salzsäure wird 1 Stunde stehen gelassen. Anschließend wird das Sol mit einem 30 µm Rakel auf eine Glasplatte aufgezogen. Die Filme werden nach 24 h und nach 48 h Raumtemperaturtrocknung beurteilt.

### Komponente A

21,7 g (0,098 mol) 3-Aminopropyltrimethoxysilan werden mit 21,7 g Ethanol verdünnt. 39,2 g (0,1 val) 70 %iges Trimerisat aus Beispiel 1 werden mit 15,7 g N-Methylpyrrolidon versetzt und bei 25-30°C unter Kühlung zu der Aminlösung getropft. Schließlich läßt man die Lösung bei Raumtemperatur stehen, bis die NCO-Bande im IR-Spektrum verschwunden ist. Man erhält eine klare lagerstabile Lösung mit einem Festkörpergehalt von 50 %, bestehend aus 82,3% 4,4'-Diisocyanatodicyclohexylmethan-Trimerisat-Aminosilan-Addukt und 17,7% HDI-Trimerisat-Aminosilan-Addukt.

### Komponente B

21,7 g (0,098 mol) 3-Aminopropyltrimethoxysilan werden mit 267 g Ethanol verdünnt. 19,6 g (0,1 val) Desmodur® N 3300 werden mit 19,6 g N-Methylpyrrolidon versetzt und bei 25-30°C unter Kühlung zu der Aminlösung getropft. Schließlich läßt man die Lösung bei Raumtemperatur stehen, bis die NCO-Bande im IR-Spektrum verschwunden ist. Man erhält eine klare Lösung des HDI-Trimerisat-Aminosilan-Addukts mit einem Festkörpergehalt von 12,5%.

Die nachstehende Tabelle demonstriert die Eigenschaften der erfindungsgemäßen Produkte.

**Tabelle 2**

| **Beispiel** | **4** | **5** | **6** | **7******* | **8******* |
|---|---|---|---|---|---|
| Komponente A | 24,7 | 19,78 | 14,83 | 9,89 | 4,94 |
| Komponente B | 0 | 16,48 | 32,96 | 49,44 | 65,92 |
| Anteil H.Trim.-Addukt | 17,7% | 31,9% | 47,1% | 63,4% | 81,0% |
| Ethanol | 57,7 | 46,14 | 34,61 | 23,07 | 11,54 |
| Tetraethoxysilan | 5,2 | 5,2 | 5,2 | 5,2 | 5,2 |
| Salzsäure 0,0067 n | 12,3 | 12,3 | 12,3 | 12,3 | 12,3 |
| Filmoptik | klar | geringe Trübung | leichte Trübung | moderate Trübung | starke Trübung |

| 24 h | | | | | |
|---|---|---|---|---|---|
| Aceton | 0 | 0 | 0 | 0 | 2 |
| Ethanol | 0 | 0 | 0 | 2 | 2 |
| Fuchsinlösung | 0 | 1 | 1 | 3 | 5 |
| Edding® 850 | 0 | 0 | 0 | 0 | 0 |

| 48 h | | | | | |
|---|---|---|---|---|---|
| Aceton | 0 | 0 | 0 | 0 | 2 |
| Ethanol | 0 | 0 | 0 | 0 | 2 |
| Fuchsinlösung | 0 | 0 | 0 | 0 | 4 |
| Edding® 850 | 0 | 0 | 0 | 0 | 0 |

| | | | | | |
|---|---|---|---|---|---|
| * außerhalb der Erfindung | | | | | |

### Beispiel 9 nicht erfindungsgemäßes Vergleichsbeispiel

Ein 2K-Polyurethan-Klarlack aus Desmophen® A665 und Desmodur® N3390 (NCO/OH=1, 50 % Festkörper, 0,2 % Dibutylzinndilaurat) wird mit einem 120 µm-Rakel auf eine Glasplatte aufgetragen und über Nacht bei 60°C getrocknet. Die Prüfung der Beständigkeit des Films gegenüber Ethanol, Aceton Fuchsinlösung und Marker erfolgt nach 24 h, die Prüfung der Kratzbeständigkeit erfolgt nach 48 h Raumtemperaturlagerung auf einem Rotahub Scratchtester der Firma Bayer (Kratzmedium Kopierpapier Agfa 701, Anduckkraft 0,7 N, Probentellerdurchmesse 70 mm, Tellerdrehzahl 197 min⁻¹, Hubgeschwindigkeit 2 m/min) Der Glanz (20°) wird nach DIN 67530, der Haze nach ISO/CD 13803 bestimmt.

### Beispiel 10 erfindungsgemäß

Analog Beipiel 2 wird das dort beschriebene beschichtungsfertige Sol auf einen Polyurethan-Klarlack (Beispiel 9) aufgetragen. Die Prüfung der Kratz- und Chemikalienbeständigkeit werden analog Beispiel 9 vorgenommen.

### Beispiel 11

Eine verringerte Funktionalität wirkt sich negativ auf die Eigenschaften aus, was aus dem diesem Veregleichsbeispiel hervorgeht. Daher sind im Sinne der Erfindung nur die höherfunktionellen 4,4'-Diisocyanatodicyclohexylmethan-Polymerisate geeignet.

### Nicht erfindungsgemäßes Vergleichsbeispiel

600 g 4,4'-Diisocyanatodicyclohexylmethan (Desmodur® W, Handelsprodukt der Bayer AG) werden im Vakuum entgast und mit 500 ppm Ionol versetzt. Anschließend wird auf 60°C augeheizt und 0,6 g einer 10 %igen Lösung von Triton® B (Benzyltrimethylammoniumhydroxid) in 1-Butanol zugegeben. Nachdem der NCO-Gehalt auf 28,5 % gefallen ist, werden weitere 0,3 g des Katalysators zudosiert und die Temperatur auf 68°C erhöht. Beim Erreichen eines NCO-Gehaltes von 25,4 % werden 0,15 g Dibutylphosphat als Stopper zugesetzt, mit 257,7 g N-Methylpyrrolidon verdünnt und auf Raumtemperatur abgekühlt. Man erhält ein antrimerisiertes 4,4'-Diisocyanatodicyclohexylmethan-Trimerisat mit einer mittleren Funktionalität von 2,2 und einem Gehalt an freiem 4,4'-Diisocyanatodicyclohexylmethan von 58,5 % 21,7 g (0,098 mol) 3-Aminopropyltrimethoxysilan werden mit 210 g Ethanol verdünnt. 23,62 g (0,1 val) der obigen Trimerisatlösung werden bei 25-30°C unter Kühlung zu der Aminlösung getropft. Schließlich läßt man die Lösung bei Raumtemperatur stehen, bis die NCO-Bande im IR-Spektrum verschwunden ist. Danach werden 16,0 g Tetraethoxysilan zugefügt. Man erhält eine Lösung mit einem Festkörpergehalt von 20 %.

Um das beschichtungsfertige Sol zu erhalten, werden zu 100 g der obigen Lösung 14 g 0,0067 n Salzsäure zugegeben und 1 Stunde stehen gelassen. Anschließend wird das Sol mit einem 30 µm Rakel auf eine Glasplatte aufgetragen und 24 Stunden bei Raumtemperatur aushärten lassen. Die Prüfung der Kratz- und Chemikalienbeständigkeit werden analog Beispiel 9 vorgenommen.

Untenstehend sind die Beständigkeitseigenschaften der Produkte aus den Beispielen 9 (nicht erfindungsgemäß), 10 (erfindungsgemäß) und 11 (nicht erfindungsgemäß) im Vergleich aufgeführt.

**Tabelle 3**

| **Beispiel** | **9******* | **10** | **11******* |
|---|---|---|---|
| NCO-Funktionalität des Ausgangspolyisocyanates | - | 3,5 | 2,2 |
| Filmoptik | klar | klar | klar |
| Aceton | 1 | 0 | 0 |
| Ethanol | 3 | 0 | 2 |
| Fuchsinlösung | 4 | 0 | 3 |
| Edding® 850 | 3 | 0 | 1 |

| Kratzbeständigkeitsprüfung im Rota-Hub-Gerät | | | |
|---|---|---|---|
| Anfangsglanz ¹⁾ | 91,1 | 87,1 | 87,0 |
| Endglanz nach 30 Hüben¹⁾ | 75,6 | 86,5 | 81.0 |
| ΔGlanz¹⁾ | 15,5 | 0,6 | 6,0 |
| Anfangshaze ²⁾ | 6,0 | 7,7 | 7,9 |
| Endhaze nach 30 Hüben ²⁾ | 48,2 | 9,5 | 15,3 |

| | | | |
|---|---|---|---|
| * außerhalb der Erfindung | | | |
| 1) DIN 67 530 | | | |
| 2) DIN ...ISO/CD 13803 | | | |

## Patentansprüche

1. Lack-Zubereitungen **dadurch gekennzeichnet, daß** sie im Lackfestkörper 40 bis 100 Gew.-% eines Alkoxysilyl-funktionellen Polyisocyanat-Polyharnstoffs enthalten, der hergestellt wird aus
A) einem Polyisocyanat(-gemisch), das zu mindestens 50 Gew.-% aus einem 4,4'-Diisocyanatodicyclohexylmethan-Polyisocyanat besteht und eine mittlere NCO-Funktionalität von 2,5 bis 5,5, einen Gehalt an Isocyanatgruppen-Gruppen von 11,0 bis 20,0 Gew.-% und einen Gehalt an monomerem Diisocyanat von kleiner 10 Gew.-% aufweist,
und
B) mindestens 0,7 Äquivalenten (bez. auf Isocyanatgruppen) Aminosilan der Formel (I)
(RO)ₙY₍₃₋ₙ₎Si-CH₂CH₂CH₂-NHZ (I),
in welcher
R für Methyl, Ethyl,
Y für Methyl,
Z für H, C₁-C₁₂-Alkyl, CH₂CH₂CH₂-Si(RO)ₙY₃₋ₙ und
n für die Zahl 1, 2 oder 3
steht und
C) gegebenenfalls weiteren gegenüber Isocyanaten reaktiven Verbindungen.

2. Lackzubereitungen nach Anspruch 1, **dadurch gekennzeichnet, daß** 0 bis 5 Äquivalent-Prozente aller ursprünglichen NCO-Gruppen mit den als Lösungsmittel verwendeten niedermolekularen Monoalkoholen umgesetzt werden.

3. Lackzubereitungen nach Anspruch 1, in denen das unter A) eingesetzte 4,4'-Diisocyanatodicyclohexylmethan-Polyisocyanat ein Trimerisat (Isocyanurat) ist und die eingesetzte Polyisocyanatmischung mehr als 70 Gew.-% davon enthält.

4. Lackzubereitungen nach Anspruch 1, in denen die mittlere Funktionalität des unter A) eingesetzten 4,4'-Diisocyanatodicyclohexylmethan-Polyisocyanats größer 2,8 und der Gehalt an monomerem 4,4'-Diisocyanatodicyclohexylmethan kleiner 2,0 Gew.-%.

5. Lackzubereitungen nach Anspruch 1, in denen die mittlere Funktionalität des unter A) eingesetzten 4,4'-Diisocyanatodicyclohexylmethan-Polyisocyanats größer 3,0 und der Gehalt an monomerem 4,4'-Diisocyanatodicyclohexylmethan kleiner 0,5 Gew.-%.

6. Lackzubereitung nach Anspruch 1, wobei für B) 3-Aminopropyltriethoxysilan oder 3-Aminopropyltrimethoxysilan verwendet wird.

7. Lackzubereitung nach Anspruch 1, wobei die Polyisocyanat-Mischung A) mit mindestens 0,8 Äquivalenten Amin B) pro Isocyanat-Äquivalent umgesetzt wird.

8. Lackzubereitung nach Anspruch 1, worin 20-50 Gew.-%, bezogen auf den Lackfestkörper eines Silans der Formel (II)
QSi(OX)₃ (II).
in welcher
X für Me, Et, iPr, Bu
und
Q für H, C₁- bis C₈-Alkyl, Phenyl, Methoxy, Ethoxy, 3-Glycidyloxy-propyl, 3-Aminopropyl, 3-Methacroyloxy-propyl
steht
oder daraus erhältliche Hydrolysate/Kondensate mitverwendet werden.

9. Lackzubereitung nach Anspruch 7, worin als Silan Tetraethoxysilan oder daraus erhältliche Hydrolysate/Kondensate mitverwendet werden.

10. Lackzubereitung nach Anspruch 1, **dadurch gekennzeichnet, daß** diese als Sol-Gel-Lacksystem vorliegt.

11. Verwendung der Lackzubereitung nach Anspruch 1 zur Beschichtung von Lacken, Kunststoffen, Granit, Marmor, Metall, Holz, Leder und Textilien.

## Claims

1. Lacquer preparations, **characterised in that** the lacquer solids thereof contain 40 to 100 % by weight of an alkoxysilyl-functional polyisocyanate-polyurea which is produced from
A) a polyisocyanate (mixture), at least 50 % by weight of which consists of a 4,4'-diisocyanatodicyclohexylmethane polyisocyanate and which has an average NCO functionality from 2.5 to 5.5, a content of isocyanate groups from 11.0 to 20.0 % by weight and a content of monomeric diisocyanate of less than 10 % by weight,
and
B) at least 0.7 equivalents (with respect to isocyanate groups) of an aminosilane of formula (I)
(RO)ₙY₍₃₋ₙ₎Si-CH₂CH₂CH₂-NHZ (I),
wherein
R represents methyl or ethyl,
Y represents methyl,
Z represents H, a C₁-C₁₂ alkyl or CH₂CH₂CH₂-Si(RO)ₙY₃₋ₙ, and
n represents the numbers 1,2 or 3,
and
C) optionally from other compounds which are reactive towards isocyanates.

2. Lacquer preparations according to claim 1, **characterised in that** 0 to 5 equivalent percent of all the original NCO groups are reacted with the low molecular weight monoalcohols used as solvents.

3. Lacquer preparations according to claim 1, wherein the 4,4'-diisocyanatodicyclohexylmethane polyisocyanate as defined in A) which is used is a trimer (isocyanurate) and the polyisocyanate mixture which is used contains more than 70 % by weight thereof.

4. Lacquer preparations according to claim 1, wherein the average functionality of the 4,4'-diisocyanatodicyclohexylmethane polyisocyanate as defined in A) which is used is greater than 2.8 and the content of monomeric 4,4'-diisocyanatodicyclohexylmethane is less than 2.0% by weight.

5. Lacquer preparations according to claim 1, wherein the average functionality of the 4,4'-diisocyanatodicyclohexylmethane polyisocyanate as defined in A) which is used is greater than 3.0 and the content of monomeric 4,4'-diisocyanatodicyclohexyl-methane is less than 0.5% by weight.

6. A lacquer preparation according to claim 1, wherein 3-aminopropyltriethoxysilane or 3-aminopropyltrimethoxysilane is used as B).

7. A lacquer preparation according to claim 1, wherein polyisocyanate mixture A) is reacted with at least 0.8 equivalents of amine B) per isocyanate equivalent.

8. A lacquer preparation according to claim 1, wherein 20-50 % by weight, with respect to the lacquer solids, of a silane of formula (II)
QSi(OX)₃ (II),
wherein
X represents Me, Et, iPr or Bu
and
Q represents H, a C₁ to C₈ alkyl, phenyl, methoxy, ethoxy, 3-glycidyloxy-propyl, 3-aminopropyl or 3-methacroyloxy-propyl,
or hydrolysates/condensates obtainable therefrom, is used in conjunction.

9. A lacquer preparation according to claim 7, wherein tetraethoxysilane or hydrolysates/condensates obtainable therefrom are used in conjunction as a silane.

10. A lacquer preparation according to claim 1, **characterised in that** it exists as a sol-gel lacquer system.

11. The use of the lacquer preparation according to claim 1 for the coating of lacquers, plastics, granite, marble, metal, wood, leather and textiles.

## Revendications

1. Préparations de vernis, **caractérisées en ce qu'**elles contiennent dans l'extrait sec du vernis de 40 à 100 % en poids de polyisocyanate-polyurée avec une fonctionnalité alcoxysilyle qui est fabriquée à partir :
A) d'un (mélange) polyisocyanate, qui comprend au moins 50 % en poids d'un 4,4'-diisocyanatodicyclohexylméthane-polyisocyanate et une fonctionnalité moyenne NCO de 2,5 à 5,5, une teneur en groupes de groupes isocyanates de 11,0 à 20,0 % en poids et une teneur en diisocyanate monomère inférieure à 10 % en poids,
et
B) d'au moins 0,7 équivalent (rapporté aux groupes isocyanates) d'aminosilane de formule (I)
(RO)ₙY₍₃₋ₙ₎Si-CH₂CH₂CH₂-NHZ (I),
dans laquelle
R représente un groupe méthyle, un groupe éthyle
Y représente un groupe méthyle,
Z représente un atome d'hydrogène, un groupe alkyle en C₁-C₁₂, CH₂CH₂CH₂-Si(RO)ₙY₃₋ₙ et
n représente le nombre 1, 2 ou 3
et
C) le cas échéant d'autres composés réactifs aux isocyanates.

2. Préparations de vernis selon la revendication 1, **caractérisées en ce que** 0 à 5 pour cent d'équivalent de tous les groupes NCO initiaux sont convertis avec des monoalcools à poids moléculaire faible utilisés comme solvant.

3. Préparations de vernis selon la revendication 1, dans lesquelles le 4,4'-diisocyanatodicyclohexylméthane-polyisocyanate utilisé sous A) est un trimérisat (isocyanurate) et le mélange de polyisocyanates utilisé contient plus de 70 % en poids de celui-ci.

4. Préparations de vernis selon la revendication 1, dans lesquelles la fonctionnalité moyenne du 4,4'-diisocyanatodicyclohexylméthane-polyisocyanate utilisée sous A) est supérieure à 2,8 et la teneur en 4,4'-diisocyanatodicyclohexylméthane monomère est inférieure à 2,0%.

5. Préparations de vernis selon la revendication 1, dans lesquelles la fonctionnalité moyenne du 4,4' - diisocyanatodicyclohexylméthanepolyisocyanate utilisée sous A) est supérieure à 3,0 et la teneur en 4,4'- diisocyanatodicyclohexylméthane monomère est inférieure à 0,5%.

6. Préparation de vernis selon la revendication 1, dans laquelle on utilise pour B) un 3-aminopropyltriéthoxysilane ou un 3-aminopropyltriméthoxysilane.

7. Préparation de vernis selon la revendication 1, dans laquelle le mélange polyisocyanate A) est converti avec au moins 0,8 équivalent d'amine B) par équivalent d'isocyanate.

8. Préparation de vernis selon la revendication 1, dans laquelle on utilise conjointement 20 à 50 % en poids, rapporté à l'extrait sec du vernis d'un silane de formule (II)
QSi(OX)₃ (II),
dans laquelle
X représente Me, Et, iPr, Bu
et
Q représente un atome d'hydrogène, un groupe alkyle de C₁ à C₈, un groupe phényle, un groupe méthoxy, un groupe éthoxy, un groupe 3-glycidyloxypropyle, un groupe 3-aminopropyle, un groupe 3-méthacryloyloxypropyle
ou
des hydrolysats/condensats obtenus à partir de ceux-ci.

9. Préparation de vernis selon la revendication 7, dans laquelle on utilise comme silane du tétraéthoxysilane ou des hydrolysats/condensats de ceux-ci.

10. Préparation de vernis selon la revendication 1, **caractérisée en ce que** celle-ci se présente sous la forme d'un système de vernis sol-gel.

11. Utilisation de la préparation de vernis selon la revendication 1 pour le revêtement de laques, de matières plastiques, de granite, de marbre, de métal, de bois, de cuir et de textiles.
